# DEMANDE DE BREVET EUROPEEN

(11) **EP 0 712 870 A1**
(43) Date de publication de la demande: **22.05.1996**
(21) Numéro de dépôt: 95402245.5
(22) Date de dépôt: 09.10.1995
(51) Int. Cl.: C08F 12/04

(54) **Procédé de polymérisation radicalaire d'un monomère vinylaromatique en présence d'un acide de lewis pour l'obtention de polymères de haute masse moléculaire**

(30) Priorité: 08.11.1994 FR 9413367
(71) Demandeur: ELF ATOCHEM S.A., F-92800 Puteaux (FR)
(72) Inventeur: Sarraf, Tarek, F-64140 Lons (FR)

(57) **Abrégé**

L'invention concerne un procédé de polymérisation radicalaire d'au moins un monomère vinylaromatique en présence d'un acide de Lewis pour l'obtention de polymères de haute masse moléculaire.

## Description

La présente invention concerne un procédé de polymérisation radicalaire d'au moins un monomère vinylaromatique en présence d'au moins un acide de Lewis, pour l'obtention de polymères de haute masse moléculaire.

Un polymère vinylaromatique de haute masse moléculaire résiste mieux à l'étirement lors de la fabrication de films biorientés, lesquels trouvent une application par exemple dans l'emballage. Par ailleurs, de tels polymères présentent généralement une meilleure résistance aux solvants et de plus forts modules d'élasticité. Par haute masse moléculaire, on entend généralement que la masse moléculaire moyenne en poids (Mw) est supérieure à 300 000 grammes par mole, voire supérieure à 350 000 grammes par mole.

Pour augmenter la masse moléculaire des polymères vinylaromatiques, on peut baisser la température de polymérisation, mais ceci se traduit d'une part par une plus faible vitesse de polymérisation et d'autre part, par une augmentation de la viscosité du milieu de polymérisation, deux phénomènes constituant des inconvénients majeurs sur des unités industrielles. Il n'est pas possible de compenser suffisamment la perte de vitesse de polymérisation par l'ajout de peroxydes. Les procédés de polymérisation anionique permettent de synthétiser des polymères vinylaromatiques de haute masse moléculaire. Ces procédés font cependant appel à des catalyseurs onéreux et à des installations spécifiques.

La demande de brevet WO 92113904 enseigne que des polymères vinylaromatiques de haute masse moléculaire peuvent être obtenus lorsque la polymérisation est effectuée en présence d'un acide organique protonique dont le Pka est compris entre 0,5 et 2,5. Selon cette demande, l'utilisation d'un acide capable de libérer un proton est indispensable.

Il a maintenant été trouvé que la polymérisation d'au moins un monomère vinylaromatique en présence d'au moins un acide de Lewis mène à un polymère de plus haute masse moléculaire qu'en l'absence dudit acide de Lewis. Ceci est valable même si l'acide de Lewis n'est pas protonique, c'est-à-dire s'il exerce sa fonction d'acide de Lewis sans céder aucun proton. Ceci est également valable en l'absence de tout acide protonique dans le milieu de polymérisation. La présence d'un sel d'ammonium quaternaire n'est pas non plus nécessaire.

Le procédé selon l'invention peut être mis en oeuvre lorsqu'il s'agit de polymériser un ou plusieurs monomères vinylaromatique entre eux comme c'est par exemple le cas pour la préparation d'un polystyrène cristal ou d'un polystyrène choc, ce dernier matériau étant constitué d'une matrice polystyrène et de nodules de caoutchouc.
Un acide de Lewis est un accepteur d'une paire d'électrons. L'acide de Lewis peut par exemple être choisi parmi les composés de formule AlR¹RR³ dans laquelle R¹, R et R³, pouvant être identiques ou différents représentent un atome d'halogène comme le chlore, le brome, l'iode, ou un groupement hydrocarboné saturé linéaire, ramifié ou cyclique, contenant de 1 à 18 atomes de carbone. On peut citer parmi ces composés le chlorure d'aluminium AlCl₃, le bromure d'aluminium AlBr₃, le triméthylaluminium Al(CH₃)₃, le chlorure de diéthylaluminium AlCl(C₂H₅)₂, le tri-n-hexhylaluminium Al(C₆H₁₄)₃.

L'acide de Lewis peut également être choisi parmi les composés suivants : BCl₃, BF₃, SnCl₄, SnBr₄, Znl₂, ZnBr₂, ZnCl₂ et SnCl₂.

Parmi les composés précités, les dérivés de l'aluminium de formule AlR¹RR³ sont préférés.

La pluspart des composés précités sont notablement moins corrosifs que les acides protoniques préconisés par l'art antérieur vis à vis des matériaux habituellement utilisés dans les installations de production de polymères vinylaromatiques.

L'acide de Lewis peut être mélangé aux monomères destinés à être polymérisés ou il peut être introduit au cours d'une polymérisation. Il est préférable que l'acide de Lewis soit soluble dans le milieu de polymérisation. Pour le cas ou l'acide de Lewis est un solide, il est possible d'introduire celui-ci dans le milieu de polymérisation à l'état solubilisé dans un solvant inerte vis à vis de l'acide de Lewis lui-même et du milieu de polymérisation. Dans le cas de AlCl₃, on peut utiliser l'éthylbenzène comme solvant inerte.

De préférence, l'acide de Lewis est introduit dans le milieu de polymérisation à raison de 5 à 5000 ppm sur la base du ou des monomères vinylaromatique.

La polymérisation peut être initiée thermiquement et sans initiateur de radicaux libres, auquel cas elle est généralement conduite entre 100 et 200°C et de préférence entre 120 et 160°C.

La présence de l'acide de Lewis tend à ralentir la vitesse de polymérisation. Il est cependant possible, pour compenser cet effet, d'ajouter un initiateur de radicaux libres au milieu de polymérisation. Cet initiateur peut être choisi parmi les peroxydes et hydroperoxydes organiques comme le peroxyde de dibenzoyle, le peroxybenzoate de tert-butyle, le 1,1-bis-(tertbutylperoxy)cyclohexane.

L'initateur de radicaux libres peut être présent dans le milieu de polymérisation à raison de 50 à 2000 ppm sur la base du ou des monomères vinylaromatiques.

La présence de cet initiateur de radicaux libres permet éventuellement de commencer la polymérisation entre 25 et 100°C. Cependant, si l'on souhaite faire jouer à l'acide de Lewis le rôle décrit dans la présente demande, il convient de porter ensuite la température de polymérisation à une température à laquelle une polymérisation aurait tout de même lieu si l'initiateur de radicaux libre était absent, c'est à dire généralement entre 100 et 200°C et de préférence entre 120 et 160°C.

La polymérisation peut être réalisée en masse, c'est-à-dire en l'absence de solvant ou en présence de moins de 10 % en masse de solvant, ou en solution, c'est à dire en présence de plus de 10 % en masse d'un solvant.

Le solvant doit être choisi de telle sorte qu'il soit inerte vis à vis des ingrédients présents dans le milieu de polymérisation, qu'il ne bout pas dans les conditions de polymérisation et de telle sorte qu'il soit miscible avec le ou les monomère(s) vinylaromatique(s) et le polymère ou copolymère vinylaromatique qui en dérive. Comme solvant, on peut utiliser les hydrocarbures alicycliques tels que le cyclohexane, ou les hydrocarbures aromatiques tels que le toluène, le benzène, l'éthylbenzène ou le xylène. Ce solvant peut être présent à raison de 0 à 30 % en masse. De préférence, la polymérisation est conduite en présence de 1 à 10 % en masse de solvant.

Le monomère vinylaromatique peut être choisi parmi le styrène, le styrène substitué sur le groupement vinyl par un groupement alkyl contenant par exemple de 1 à 4 atomes de carbone comme l'alpha-méthylstyrène ou l'alpha-éthylstyrène, le styrène substitué sur le cycle par un groupement alkyl contenant par exemple de 1 à 4 atomes de carbone comme l'ortho-vinyltoluène, le para-vinyltoluène, l'orthoéthylstyrène, le 2,4-diméthylstyrène, le styrène substitué sur le cycle par un halogène comme par exemple le 2,4-dichlorostyrène, le styrène substitué à la fois par un halogène et un groupement alkyl contenant par exemple de 1 à 4 atomes de carbone comme le 2-chloro-4-méthylstyrène. Le styrène est un monomère vinylaromatique préféré.

Le milieu de polymérisation peut également inclure un ou plusieurs comonomère(s) du ou des monomère(s) vinylaromatique(s). Le terme polymère vinylaromatique dont il est fait ici usage inclut donc des copolymères. Ce comonomère peut par exemple être choisi parmi l'acrylonitrile, le méthacrylonitrile, l'acide acrylique, l'acide méthacrylique, un ester d'alkyle dont le groupement alkyle contient de 1 à 4 atomes de carbone, un N-alkylmaléimide dont le groupement alkyle contient de 1 à 4 atomes de carbone, le N-phénylmaléimide.

Lorsque la polymérisation doit aboutir à un polymère vinylaromatique choc, le milieu de polymérisation contient de plus un caoutchouc, lequel est généralement un polydiène conjugué et habituellement un ou plusieurs polybutadiènes.

L'avancement de la polymérisation peut être suivi grâce à des prélèvements effectués au cours de l'étape de polymérisation et par détermination du taux de solide sur les échantillons prélevés. Par taux de solide on entend le pourcentage en poids de solide obtenu après évaporation sous un vide de 25 millibars pendant environ 20 minutes à 200°C des échantillons prélevés par rapport au poids initial de l'échantillon. Ce traitement élimine de l'échantillon prélevé les monomères vinylaromatiques non polymérisés au moment du prélèvement.

On peut ajouter au milieu de polymérisation, avant ou au cours de la polymérisation, au moins un adjuvant habituel à ce genre de préparation. Ces adjuvants peuvent être des plastifiants comme des huiles minérales, le stéarate de butyle ou le phtalate de dioctyle, des stabilisants comme des antioxydants pouvant être le phénol substitué par un groupement alkyl tel que le ditertiobutylparacrésol ou les phosphites tel que le trinonylphénylphosphite.

Dans les exemples qui suivent, les taux de solide ont été déterminés comme il a été indiqué ci-dessus.

Par ailleurs, dans les exemples, la masse moléculaire moyenne en poids des polymères a été déterminée par chromatographie par perméation de gel (GPC) après extraction du polymère par la méthyléthylcétone.

### EXEMPLE 1 (comparatif)

Dans un réacteur de 2 litres muni d'un système d'agitation et d'une régulation de température, on introduit 1000 grammes d'une solution composée pour 95 % en poids de styrène, et pour 5 % en poids d'éthylbenzène. Le réacteur est porté à 130°C en 45 min puis maintenue à cette température pendant 4 heures. Le contenu du réacteur est alors transféré dans un dévolatilisateur à environ 180°C sous vide, environ 10 minutes de façon à extraire le styrène non polymérisé et l'éthylbenzène.

Le polymère obtenu présente une masse moléculaire moyenne en poids de 268 000 grammes par mole.

### EXEMPLE 2

On procède comme pour l'exemple 1 sauf que l'on solubilise 0,1 gramme de AlCl₃ dans les 5 % en poids d'éthylbenzène avant de mélanger cet éthylbenzène avec le styrène. Le polymère obtenu présente une masse moléculaire moyenne en poids de 360 000 grammes par mole.

### EXEMPLE 3 (comparatif)

On procède comme pour l'exemple 1 sauf que le réacteur est porté à 110°C en 30 min puis porté à 150°C en 5 heures par une montée régulière de la température. On mesure avant dévolatilisation un taux de solide de 46 % en poids.

Le polymère obtenu présente une masse moléculaire moyenne en poids de 320 000 grammes par mole.

### EXEMPLE 4

On procède comme pour l'exemple 3, sauf que l'on solubilise 0,5 gramme de AlCl₃ dans l'éthylbenzène avant de mélanger celui-ci avec le styrène. On mesure avant dévolatilisation un taux de solide de 38 % en poids.

Le polymère obtenu présente une masse moléculaire moyenne en poids de 588 000 grammes par mole.

### EXEMPLE 5

On procède comme pour l'exemple 4 sauf que l'on rajoute 400 ppm d'un peroxyde de marque lupersol 331 commercialisé par la société Elf Atochem N.A., dans la solution styrène-éthylbenzène-AlCl₃.

On mesure avant dévolatilisation un taux de solide de 48 % en poids. Le polymère obtenu présente une masse moléculaire moyenne en poids de 419 000 grammes par mole.

### EXEMPLE 6

On procède comme pour l'exemple 2 sauf que l'on remplace le AlCl₃ par 0,5 grammes de tri-n-hexylaluminium.

Le polymère obtenu présente une masse moléculaire moyenne en poids de 358 000 grammes par mole.

### EXEMPLE 7

On procède comme pour l'exemple 2 sauf que l'on remplace le AlCl₃ par 1 gramme de tri-n-hexylaluminium. Le polymère obtenu présente une masse moléculaire moyenne en poids de 360 000 grammes par mole.

## Revendications

1. Procédé de polymérisation radicalaire d'au moins un monomère vinylaromatique caractérisé en ce que la polymérisation est réalisée en présence d'un acide de Lewis non protonique.

2. Procédé selon la revendication 1 caractérisé en ce que la polymérisation est réalisée en l'absence de tout acide protonique.

3. Procédé selon la revendication 1 ou 2 caractérisé en ce que l'acide de Lewis est présent dans le milieu de polymérisation à raison de 5 à 5000 ppm sur la base du ou des monomères vinylaromatiques.

4. Procédé selon l'une des revendications 1 à 3 caractérisé en ce que la polymérisation est réalisée entre 100 et 200°C et de préférence entre 120 et 160°C.

5. Procédé selon l'une des revendications 1 à 4 caractérisé en ce que la polymérisation est réalisée en présence d'un initiateur de radicaux libres.

6. Procédé selon la revendication 5 caractérisé en ce que l'initiateur de radicaux libres est présent à raison de 50 à 2000 ppm sur la base du ou des monomères vinylaromatiques.

7. Procédé selon l'une des revendications 1 à 6 caractérisé en ce que l'acide de Lewis est un composé de formule AlR¹ RR³ dans laquelle R¹, R et R³ pouvant être identiques ou différents représentent un atome d'halogène ou un groupement hydrocarboné.

8. Procédé selon la revendication 7 caractérisé en ce que l'acide de Lewis est AlCl₃.

9. Procédé selon l'une des revendications 1 à 8 caractérisé en ce que l'acide de Lewis est introduit dans le milieu de polymérisation en solution.

10. Procédé selon l'une des revendications 1 à 9 caractérisé en ce que au moins un monomère vinylaromatique est le styrène.

11. Procédé selon la revendication 10 caractérisé en ce que le styrène est le seul monomère vinylaromatique.
